# EUROPÄISCHE PATENTSCHRIFT

(11) **EP 3 948 166 B1**
(45) Veröffentlichungstag und Bekanntmachung des Hinweises auf die Patenterteilung: **11.09.2024**
(21) Anmeldenummer: 20712873.7
(22) Anmeldetag: 12.03.2020
(51) Int. Cl.: G01D 3/08

(54) **ZUSATZMODUL FÜR EIN FELDGERÄT**
ADDITIONAL MODULE FOR A FIELD DEVICE
MODULE SUPPLÉMENTAIRE POUR UN DISPOSITIF DE TERRAIN

(30) Priorität: 02.04.2019 DE 102019108564
(43) Veröffentlichungstag der Anmeldung: 09.02.2022
(73) Patentinhaber: Endress+Hauser SE+Co. KG, 79689 Maulburg (DE)
(72) Erfinder: SCHLACHTER, Marc Andreas, 79664 Wehr (DE); TRUNZER, Wolfgang, 79540 Lörrach (DE)
(74) Vertreter: Redding, Anke
(86) Internationale Anmeldenummer: PCT/EP2020/056709
(87) Internationale Veröffentlichungsnummer: WO 2020/200689

(56) Entgegenhaltungen:
- DE-A1- 102007 062 919
- DE-A1- 102016 200 693
- DE-T5- 112008 003 195

## Beschreibung

Die Erfindung betrifft ein System umfassend: ein Feldgerät (3) zur Messung und/ oder Überwachung mindestens einer Messgröße (L), ein Zusatzmodul (1) für das Feldgerät (3) und einen verschiedene Messmodule (33) umfassenden Modulbaukasten,
wobei das Feldgerät eine Messeinrichtung zur messtechnischen Erfassung der Messgröße und einen Prozessanschluss umfasst,
wobei der Prozessanschluss dazu ausgestaltet ist, das Feldgerät derart an einem Einsatzort zu befestigen, dass ein zumindest einen Teil der Messeinrichtung umfassender, prozesszugewandter Bereich des Feldgeräts am Einsatzort herrschenden Prozessbedingungen ausgesetzt ist und ein prozessabgewandter Bereich des Feldgeräts am Einsatzort herrschenden Umgebungsbedingungen ausgesetzt ist.

Feldgeräte der eingangs genannten Art werden in einer Vielzahl verschiedener Einsatzgebiete zur Messung und/oder Überwachung von Messgrößen unterschiedlichster Art eingesetzt.

Beispiele für derartige Feldgeräte sind Druckmessgeräte, Füllstandsmessgeräte, Temperaturmessgeräte, Durchflussmessgeräte, etc. wie sie z.B. von der Endress + Hauser Gruppe vertrieben werden.

Diese Feldgeräte umfassen üblicher Weise einen Prozessanschluss, mittels dessen sie derart am jeweiligen Einsatzort montierbar sind, dass deren Messeinrichtung der prozessseitig vorliegenden zu messenden und/oder zu überwachenden Messgröße ausgesetzt ist. Zusätzlich umfassen sie regelmäßig eine an die Messeinrichtung angeschlossene Elektronik, die zum Schutz vor den prozessseitig vorliegenden Prozessbedingungen in dem prozessabgewandten Bereich des Feldgeräts angeordnet ist. Diese Elektronik dient regelmäßig dazu, anhand einer mittels der Messeinrichtung messtechnisch erfassbaren, von der Messgröße abhängigen Größe der Messgröße entsprechende Mess- und/oder Überwachungsergebnisse zu bestimmen und über eine an die Elektronik angeschlossene Schnittstelle, einen Ausgang und/oder eine Anzeige zur Verfügung zu stellen.

Mit Feldgeräten ermittelte Mess- und/oder Überwachungsergebnisse werden unter anderem in der Mess- und Regeltechnik, so wie auch in der Prozessautomatisierung dazu eingesetzt Prozesse, wie z.B. industrielle Herstellungs- und/oder Verarbeitungsprozesse, zu überwachen, zu steuern und/oder zu regeln. Entsprechend können Fehlfunktionen, Ausfälle, sowie natürlich auch fehlerbehaftete Mess- und/oder Überwachungsergebnisse von Feldgeräten schwerwiegende Folgen für Mensch und Umwelt, für die an den Einsatzorten ablaufenden Prozesses und/oder die durch diese Prozesse erzeugten Produkte haben.

Es ist bekannt, dass die Messeinrichtungen von Feldgeräten prozessseitig unter Umständen sehr widrigen Prozessbedingungen, wie z.B. hohen Temperaturen und/oder Drücken, ausgesetzt sein können, die die Messeinrichtung derart belasten, dass sie sich auf Dauer nachteilig auf die Funktionsfähigkeit des Feldgeräts auswirken. Um einen zuverlässigen, fehlerfreien Betrieb sicher zu stellen, müssen diese Messeinrichtungen ausgetauscht werden, bevor durch die Prozessbedingungen verursachte Funktionsbeeinträchtigungen ein tolerierbares Maß überschreiten. In diesem Zusammenhang ist in der DE 10 2004 063 469 A1 ein Verfahren beschrieben, gemäß dem die Messeinrichtung belastende Prozessparameter mittels der den Prozessbedingungen ausgesetzten Messeinrichtung des Feldgeräts gemessen werden und hieraus eine momentane Belastung der Messeinrichtung bestimmt wird. Zusätzlich wird anhand der während der Einsatzdauer fortlaufend bestimmten Belastungen eine Gesamtbelastung ermittelt, der die Messeinrichtung während der Einsatzdauer bisher insgesamt ausgesetzt gewesen ist. Übersteigt die Gesamtbelastung einen vorgegebenen Grenzwert, so wird die Messeinrichtung ausgetauscht. Liegt sie unterhalb des Grenzwerts, so wird anhand der Gesamtbelastung eine noch verbleibende Resteinsatzdauer prognostiziert und die Messeinrichtung vor Ablauf der Resteinsatzdauer ausgetauscht.

Feldgeräte sind jedoch nicht nur unter Umständen sehr widrigen Prozessbedingungen ausgesetzt, sondern müssen darüber hinaus auch den am Einsatzort herrschenden Umgebungsbedingungen standhalten. Wird ein Feldgerät beispielsweise an einem Einsatzort starker Sonneneinstrahlung ausgesetzt, so besteht die Gefahr, dass im Feldgerät enthaltene Dichtungen schneller altern. Wird ein Feldgerät am Einsatzort einer salzhaltigen Umgebungsatmosphäre ausgesetzt, so besteht dort eine erhöhte Korrosionsgefahr. Neben den zuvor lediglich als Beispiel genannten Umgebungsparametern gibt es natürlich je nach Einsatzort noch einer Vielzahl weiterer Umgebungsparameter, die einzeln oder in Kombination miteinander unter Umständen zu nennenswerten Beeinträchtigungen der Funktionsfähigkeit von Feldgeräten führen können
Im Unterschied zu die Messeinrichtungen von Feldgeräten belastenden Prozessparametern, die sich regelmäßig aus der vom Feldgerät zu messenden und/oder zu überwachenden Messgröße ergeben und somit für Feldgeräte eines bestimmten Typs vorbekannt und identisch sind, ist bei der Herstellung von Feldgeräten in der Regel nicht vorhersagbar, in welcher Umgebung sie später eingesetzt werden. Entsprechend ist es bei der Herstellung von Feldgeräten nicht bekannt, welche Umgebungsparameter am späteren Einsatzort zu einer nennenswerten Belastung des Feldgeräts führen können.

Dem wird heute üblicher Weise dadurch Rechnung getragen, dass Feldgeräte vor Ablauf einer für das jeweilige Gerät vom Hersteller vorgegebenen maximalen Einsatzdauer rekalibriert, gewartet und/oder ausgetauscht werden. Dabei kann für Einsatzorte bestimmter Kategorien, wie z.B. Einsatzorte in Off-Shore Anlagen, in denen üblicher Weise besonders raue Umgebungsbedingungen zu erwarten sind, eine entsprechend verkürzte Einsatzdauer angesetzt werden. Diese ist aus Sicherheitsgründen so kurz zu bemessen, dass sie auch den schlimmsten an Einsatzorten der jeweiligen Kategorie möglicher Weise auftretenden Umgebungsbedingungen gerecht wird. Das führt dazu, dass auch diejenigen Feldgeräte, die an Einsatzorten der jeweiligen Kategorie durch die Umgebungsbedingen nur deutlich geringeren Belastungen ausgesetzt sind, nach Ablauf der verkürzten Einsatzdauer rekalibriert, gewartet und/oder ausgetauscht werden. Das hat eine an sich unnötige Erhöhung der Betriebskosten zur Folge.

Umgekehrt kann ein Feldgerät an einem Einsatzort einer bestimmten Kategorie Umgebungsparametern ausgesetzt sein, die eine bei der Bemessung der maximalen Einsatzdauer vorausgesetzte Obergrenze zumindest zeitweise überschreiten. Damit besteht die Gefahr, dass die Funktionsfähigkeit dieses Feldgeräts aufgrund der Umgebungsbedingungen bereits vor Ablauf der maximalen Einsatzdauer beeinträchtigt wird. So kann beispielsweise ein in der Abwasseraufbereitung eingesetztes Feldgerät aufgrund seiner besonderen Position einer erhöhten Konzentration eines in der Umgebungsatmosphäre enthaltenen aggressiven Mediums, wie z.B. einem erhöhten Chlorgehalt, ausgesetzt sein, der eine in dieser Branche üblicher Weise auftretende Konzentration deutlich übersteigt.

In der DE 10 2016 200693 A1 ist ein Überwachungsmodul zur Überwachung eines Feldgeräts eines Automatisierungssystem beschrieben, das in Verbindungsleitungen einsetzbar ist, über die das Feldgerät mit einer Zentraleinheit verbunden ist. Dabei erfolgt der Anschluss des Überwachungsmoduls feldgerätseitig an einem Anschlusspunkt am Ort des Feldgeräts oder in einem Verteiler des Automatisierungssystem. Das Überwachungsmodul umfasst mindestens eine Messeinrichtung zur Messung einer physikalischen und/oder chemischen Umgebungsgröße, deren Messwerte vom Überwachungsmodul zur Zentraleinheit übermittelbar sind und hierdurch in der Zentraleinheit für eine Auswertung und eine eventuelle Alarmierung zur Verfügung stehen.

In der DE 11 2008 003195 T5 ist ein elektrischer Schaltkreis mit einem physikalischen Übertragungsschicht-Diagnosesystem beschrieben. Der Schaltkreis ist eine Feldbusschaltung mit einer Hauptleitung, einem Gerätekoppler und über Abzweigleitungen mit dem Gerätekoppler verbundenen Feldgeräten. Zur Überwachung von physikalischen Schichtcharakteristiken des elektrischen Schaltkreises ist ein Diagnosemodul an die Hauptleitung angeschlossen. Das Diagnosemodul weist einen Anschluss zu externen Sensoren auf, über die Umwelteinflüsse, wie z.B. die Lufttemperatur, der Luftdruck und der Feuchtigkeitszustand, um den Schaltkreis herum überwacht werden.

In der DE 10 2007 062919 A1 ist ein Feldgerät beschrieben, dass im Feldgerät integrierte Sensoren zur Messung von Umgebungsbedingungen umfasst, deren Messwerte über ein Display des Feldgeräts angezeigt werden und/oder über eine Zweidrahtleitung mittels digitaler Kommunikation abfragbar sind. Historienwerte der Messwerte werden in einer Speichereinheit des Feldgeräts abgespeichert und es wird eine Fehlermeldung ausgegeben, wenn die Messwerte überhöhte oder unzulässige Werte aufweisen.

Es ist eine Aufgabe der Erfindung eine Vorrichtung zur Erfassung von durch Umgebungsbedingungen auf ein Feldgerät ausgeübten Belastungen anzugeben, die es ermöglicht auf flexibel an die Gegebenheiten des Einsatzortes anpassbare Weise die dort vorliegenden belastungsrelevanten Einflussgrößen zu berücksichtigen.

Hierzu umfasst die Erfindung ein Zusatzmodul für ein Feldgerät zur Messung und/oder Überwachung mindestens einer Messgröße gemäß Anspruch 1.

Erfindungsgemäße Zusatzmodule bieten den Vorteil, dass sie über die gezielte Auswahl der Messmodule flexibel an die am Einsatzort des Feldgeräts vorliegenden Gegebenheiten anpassbar sind. Damit ist es auf kostengünstige Weise möglich an jedem Einsatzort jeweils diejenigen Umgebungsparameter und/oder Auswirkungen messtechnisch zu erfassen, die an dem jeweiligen Einsatzort in einem Ausmaß auftreten, das zu einer nennenswerten Belastung des Feldgeräts führen kann. Besonders vorteilhaft ist insoweit, dass es hierzu weder erforderlich ist, die einsatzort-spezifischen belastungsrelevanten Umweltparameter und/oder Auswirkungen bereits bei der Herstellung des Feldgeräts zu kennen, noch erforderlich ist jedes Feldgerät werkseitig jeweils mit einer Vielzahl von Vorrichtungen zur Erfassung unterschiedlichster Größen auszustatten, die am späteren Einsatzort des Feldgeräts möglicher Weise gar nicht in einem belastungsrelevanten Ausmaß auftreten.

Eine erste Weiterbildung umfasst ein Zusatzmodul, bei dem der Baukasten und/oder das Zusatzmodul:
ein als Temperatur-Messmodul ausgebildetes Messmodul zur messtechnischen Erfassung einer Umgebungstemperatur umfasst,
ein als Feuchte-Messmodul ausgebildetes Messmodul zur messtechnischen Erfassung einer Umgebungsfeuchtigkeit, einer relativen Luftfeuchtigkeit oder einer absoluten Luftfeuchtigkeit umfasst,
ein als Vibrations-Messmodul ausgebildetes Messmodul zur messtechnischen Erfassung von Vibrationen des Zusatzmoduls umfasst,
ein als Konzentrations-Messmodul ausgebildetes Messmodul zur messtechnischen Erfassung einer Konzentration eines Stoffes, eines aggressiven und/oder korrosiven Mediums, eines Salzgehalts und/oder eines Chlorgehalts, die in der Umgebung enthalten ist, umfasst,
ein als Strahlungs-Messmodul ausgebildetes Messmodul zur messtechnischen Erfassung einer auf das Strahlungs-Messmodul einwirkenden Strahlung, einer auf das Strahlungs-Messmodul einwirkenden Sonneneinstrahlung oder einer auf das Strahlungs-Messmodul einwirkenden radioaktiven Strahlung umfasst,
ein als Feuchte-Messmodul ausgebildetes Messmodul zur messtechnischen Erfassung einer in ein das Feuchte-Messmodul umgebendes Gehäuse eingedrungenen Feuchtigkeit umfasst,
ein Korrosions-Messmodul umfasst, das ein den Umgebungsbedingungen ausgesetztes Opferelement umfasst, das mindestens eine messbare, sich durch Korrosion des Opferelements verändernde Eigenschaft aufweist, und/oder
ein in die Aufnahmevorrichtungen einsetzbares, im eingesetzten Zustand die jeweilige Aufnahmevorrichtung verschließendes Blindmodul umfasst.

Erste Ausgestaltungen umfassen ein Zusatzmodul, bei dem die Auswertungseinheit derart ausgebildet ist, dass sie
mittels der daran angeschlossenen Messmodule erfassten momentanen Werten der Umgebungsparameter und/oder der Auswirkungen anhand von in einem Speicher abgespeicherten Kenndaten oder Kennlinien jeweils einen Umgebungsbelastungswert zuordnet und die momentane Belastung als Funktion, als Summe oder als gewichtete Summe der Umgebungsbelastungswerte bestimmt,
die Gesamtbelastung als Integral der fortlaufend bestimmten Belastungen über die bisherige Einsatzdauer bestimmt,
einen Alarm ausgibt, sobald die momentane Belastung und/oder die bisherige Gesamtbelastung einen hierfür vorgegebenen Grenzwert überschreitet, und/oder
anhand der Gesamtbelastung eine verbleibende Resteinsatzdauer ermittelt.

Eine zweite Ausgestaltung umfasst ein Zusatzmodul, das einen an die Auswertungseinheit angeschlossenen Ausgang umfasst, über den die Auswertungseinheit die momentane Belastung, die Gesamtbelastung, die verbleibende Resteinsatzdauer und/oder den Alarm ausgibt, anzeigt und/oder in auslesbarer Form zur Verfügung stellt.

Gemäß einer zweiten Weiterbildung ist das Zusatzmodul als ein auf einem Gehäuse des prozessabgewandten Bereichs des Feldgeräts montierbarer Gehäusedeckel ausgebildet.

Eine dritte Weiterbildung umfasst ein Zusatzmodul, bei dem
die Messmodule und die Aufnahmevorrichtungen zueinander komplementäre Verbindungselemente aufweisen, über die die Messmodule in den Aufnahmevorrichtung befestigbar oder befestigt sind und/oder über die die Messmodule elektrisch an die Auswertungseinheit anschließbar oder angeschlossen sind.

Eine vierte Weiterbildung umfasst ein Zusatzmodul, bei dem mindestens eines oder jedes Messmodul des Baukastens und/oder der Zusatzeinrichtung jeweils eine mittels der daran angeschlossenen Auswertungseinheit auslesbare Modulkennung aufweist.

Eine fünfte Weiterbildung umfasst ein Zusatzmodul, das elektrische Anschlussmittel umfasst, über die das Zusatzmodul elektrisch an eine in dem prozessabgewandten Bereich des Feldgeräts angeordnete Elektronik des Feldgeräts anschließbar oder angeschlossen ist.

Gemäß einer Weiterbildung der fünften Weiterbildung ist das Zusatzmodul derart ausgebildet ist, dass es über die elektrischen Anschlussmittel vom Feldgerät mit Energie versorgbar ist.

Gemäß einer Weiterbildung der fünften Weiterbildung oder deren Weiterbildung
ist die Auswertungseinheit dazu ausgebildet, die momentane Belastung und/oder die Gesamtbelastung unter zusätzlicher Berücksichtigung mindestens einer über die Anschlussmittel an die Auswertungseinheit übermittelbaren oder übermittelten, vom Feldgerät messtechnisch erfassbaren oder erfassten Prozessgröße zu bestimmen, und
die Prozessgrößen umfassen die Messgröße und/oder mindestens eine jeweils mittels der Messeinrichtung oder mittels eines in dem prozesszugewandten Bereich des Feldgeräts angeordneten Sensors messtechnisch erfassbare oder erfasste Hilfsgröße.

Gemäß einer Weiterbildung des Zusatzmoduls gemäß der ersten Ausgestaltungen und der letztgenannten Weiterbildung ist die Auswertungseinheit derart ausgebildet, dass sie dem momentanen Wert jeder Prozessgröße jeweils anhand von in dem Speicher abgespeicherten Kenndaten oder Kennlinien einen Prozessbelastungswert zuordnet und die momentane Belastung als Funktion, als Summe oder als gewichtete Summe der Prozessbelastungswerte und der Umgebungsbelastungswerte bestimmt.

Des Weiteren umfasst die Erfindung ein Feldgerät mit einem erfindungsgemäßen Zusatzmodul,
das die Messeinrichtung zur messtechnischen Erfassung der Messgröße, den zumindest einen Teil der Messeinrichtung umfassenden prozesszugewandten Bereich, den prozessabgewandten Bereich und den Prozessanschluss umfasst,
wobei der Prozessanschluss dazu ausgestaltet ist, das Feldgerät derart an einem Einsatzort zu befestigen, dass der prozesszugewandte Bereich am Einsatzort herrschenden Prozessbedingungen ausgesetzt ist und der prozessabgewandte Bereich am Einsatzort herrschenden Umgebungsbedingungen ausgesetzt ist, und
bei dem das Zusatzmodul mittels der Befestigungsmittel auf dem prozessabgewandten Bereich des Feldgeräts montiert ist.

Eine Weiterbildung des Feldgerät mit einem Zusatzmodul gemäß der fünften Weiterbildung oder deren Weiterbildung zeichnet sich dadurch aus, dass
das Feldgerät eine in dem prozessabgewandten Bereich des Feldgeräts angeordnete, an die Messeinrichtung angeschlossene Elektronik umfasst, und
das Feldgerät dazu ausgestaltet ist mindestens eine Prozessgröße messtechnisch zu erfassen und über eine an die Elektronik angeschlossene Schnittstelle oder eine für den Anschluss einer Bedieneinheit und/oder einer Anzeige vorgesehene, an die Elektronik angeschlossene Schnittstelle zur Verfügung zu stellen,
wobei die Prozessgrößen die Messgröße und/oder mindestens eine jeweils mittels der Messeinrichtung oder mittels eines in dem prozesszugewandten Bereich des Feldgeräts angeordneten Sensors messtechnisch erfassbare Hilfsgröße umfassen, und
wobei die Zusatzeinrichtung über die Schnittstelle an die Elektronik angeschlossen ist.

Des Weiteren umfasst die Erfindung ein erfindungsgemäßes Feldgerät,
das eine in dem prozessabgewandten Bereich angeordnete Elektronik umfasst, und
bei dem die Zusatzeinrichtung an die Elektronik angeschlossen ist und über die Elektronik mit Energie versorgt wird.

Des Weiteren umfasst die Erfindung ein erfindungsgemäßes Feldgerät, bei dem
der prozessabgewandte Bereich des Feldgeräts ein Gehäuse umfasst, und
die Zusatzeinrichtung einen auf dem Gehäuse montierten Gehäusedeckel bildet.

Die Erfindung und weitere Vorteile werden nun anhand der Figuren der Zeichnung, in denen ein Ausführungsbeispiel dargestellt ist, näher erläutert. Gleiche Elemente sind in den Figuren mit den gleichen Bezugszeichen versehen.
- Fig. 1 zeigt:: ein an einem Einsatzort montiertes Feldgerät mit einem Zusatzmodul; und
- Fig. 2 zeigt:: das Zusatzmodul von Fig. 1.

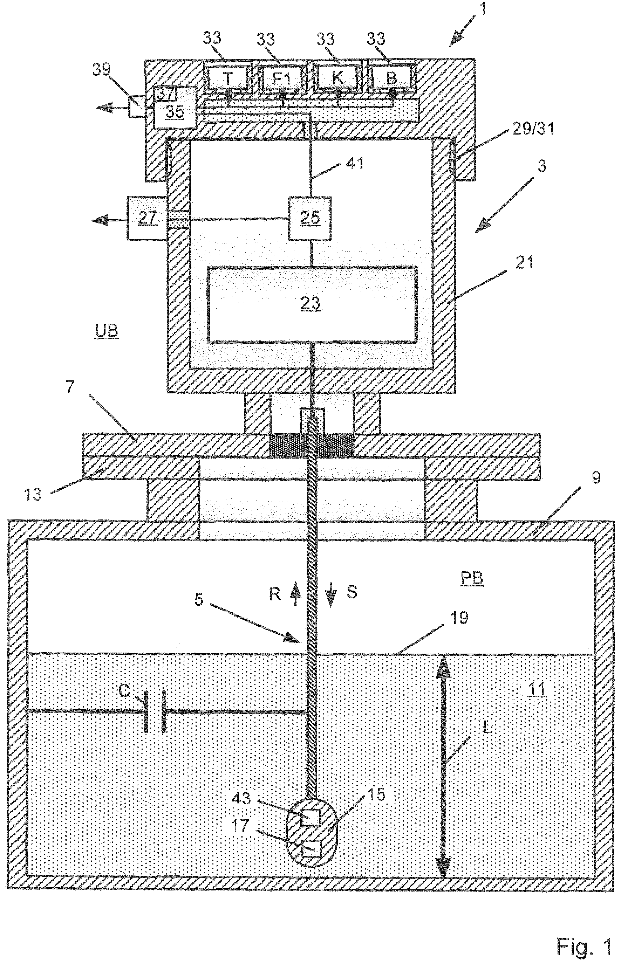

Die Erfindung umfasst ein Zusatzmodul 1 für ein Feldgerät 3 zur Messung und/oder Überwachung mindestens einer Messgröße L, sowie ein mit einem solchen Zusatzmodul 1 ausgestattetes Feldgerät 3. Ein Beispiel eines mit einem erfindungsgemäßen Zusatzmodul 1 ausgestatteten Feldgeräts 3 ist in Fig. 1 dargestellt.

Erfindungsgemäße Zusatzmodule 1 sind in Verbindung mit Feldgeräten 3 einsetzbar, die eine Messeinrichtung 5 zur messtechnischen Erfassung der Messgröße L und einen Prozessanschluss 7 umfassen. Dabei ist der Prozessanschluss 7 dazu ausgestaltet, das Feldgerät 3 derart an einem Einsatzort zu befestigen, dass ein zumindest einen Teil der Messeinrichtung 5 umfassender, prozesszugewandter Bereich des Feldgeräts 3 am Einsatzort herrschenden Prozessbedingungen PB ausgesetzt ist, und ein prozessabgewandter Bereich des Feldgeräts 3 am Einsatzort herrschenden Umgebungsbedingungen UB ausgesetzt ist.

Fig. 1 zeigt als Beispiel ein als Füllstandsmessgerät zur Messung und/oder Überwachung eines Füllstands L eines in einem Behälter 9 befindlichen Füllguts 11 ausgebildetes Feldgerät 3, dessen hier als Flansch ausgebildeter Prozessanschluss 7 auf einem am Einsatzort vorgesehenen, hierzu komplementären Prozessanschluss 13, wie z.B. dem hier dargestellten Gegenflansch, montiert ist. Alternativ sind natürlich auf andere aus dem Stand der Technik bekannte Prozessanschlussvarianten einsetzbar.

Die hier als Beispiel dargestellte Messeinrichtung 5 umfasst eine sich in den Behälter 9 hinein erstreckende, hier den im Behälter 9 herrschenden Prozessbedingungen PB ausgesetzte stab- oder seilförmigen Sonde mittels der eine vom Füllstand L abhängige Größe messtechnisch erfassbar ist. Als füllstandsabhängige Größe eignet sich z.B. ein mittels eines an dem in dem Behälter 9 befindlichen Endbereich 15 der Sonde angeordneten Drucksensors 17 messtechnisch erfassbarer, vom Füllstand L abhängiger hydrostatischer Druck oder eine vom Füllstand L abhängige Kapazität eines durch die in diesem Fall als Elektrode dienende Sonde und eine die Sonde umgebende Behälterwand des Behälters 9 gebildeten Kondensators C. Alternativ oder zusätzlich kann das Füllstandsmessgerät dazu ausgebildet sein, elektromagnetische Signale S entlang der in dem Fall als Wellenleiter dienenden Sonde in den Behälter 9 zu senden und deren an einer Füllgutoberfläche 19 zurück reflektierten Echosignale R nach einer vom Füllstand L abhängigen Laufzeit wieder zu empfangen. In dem Fall bildet die messtechnisch erfassbare Laufzeit die vom Füllstand L abhängige Größe anhand der das Feldgerät 3 den Füllstand L misst und/oder überwacht.

Wie bei aus dem Stand der Technik bekannten Feldgeräten üblich, können auch die prozessabgewandten Bereiche von mit einem erfindungsgemäßen Zusatzmodul 1 ausstattbaren oder ausgestatteten Feldgeräten 3 optional jeweils ein in Fig. 1 als Option dargestelltes Gehäuse 21 umfassen, in dem eine in Fig. 1 als Option ebenfalls dargestellte Elektronik 23 angeordnet ist. Diese Elektronik 23 ist vorzugsweise derart ausgebildet, dass sie
a) die daran angeschlossene Messeinrichtung 5 mit Energie versorgt,
b) anhand der mittels der daran angeschlossenen Messeinrichtung 5 messtechnisch erfassbaren Größe ein der Messgröße L entsprechendes Mess- und/oder Überwachungsergebnis ermittelt, und/oder
c) ein vom Feldgerät 3 ermitteltes Mess- und/oder Überwachungsergebnis über eine an die Elektronik 23 angeschlossene Schnittstelle 25 zur Verfügung stellt.

Optional kann das Feldgerät 3 einen an die Schnittstelle 25 angeschlossenen Ausgang 27, wie z.B. einen Relaisausgang, einen Stromausgang, einen Signalausgang und/oder einen zur Anbindung des Feldgeräts 3 an eine Datenbusleitung, wie z.B. einen Feldbus, geeigneten Ausgang, umfassen, über den vom Feldgerät 3 ermittelte Mess- und/oder Überwachungsergebnisse ausgegeben und/oder abgefragt werden können. Alternativ oder zusätzlich hierzu können Elektronik 23 und Schnittstelle 25 optional dazu ausgestaltet sein, Mess- und/oder Überwachungsergebnisse an eine hier nicht dargestellte, an die Schnittstelle 25 anschließbare Einheit, wie z.B. eine Bedienoberfläche und/oder eine Anzeige, zu übermitteln und/oder die Einheit mit Energie zu versorgen. Auch wenn eine Vielzahl von aus dem Stand der Technik bekannten Feldgeräten die vorgenannten Ausgänge, Elektroniken und/oder Schnittstellen aufweisen, wird hier vorsorglich darauf hingewiesen, dass erfindungsgemäße Zusatzmodule 1 auch in Verbindung mit Feldgeräten 3 ohne entsprechende Elektroniken, Schnittstellen und/oder Ausgänge einsetzbar sind.

Das Zusatzmodul 1 umfasst Befestigungsmittel 29 mittels dessen das Zusatzmodul 1 auf dem prozessabgewandten Bereich des Feldgeräts 3 montierbar ist oder montiert ist. Als Befestigungsmittel 29 eignen sich aus dem Stand der Technik bekannte Befestigungsmittel, wie z.B. einen Spanngurt, eine Klemmvorrichtung, eine Steckvorrichtung, einen Flansch und/oder ein Gewinde umfassende Befestigungsmittel. Dabei hängt es von der Wahl des Befestigungsmittels 29 ab, ob am prozessabgewandten Bereich des Feldgeräts 3 feldgerätseitig ein hierzu komplementäres Befestigungsmittel 31 erforderlich ist oder nicht. Fig. 1 zeigt ein Beispiel bei dem das Befestigungsmittel 29 des Zusatzmoduls 1 und das damit verbindbare bzw. verbundene, auf dem prozessabgewandten Bereich des Feldgeräts 3 angeordnete komplementäre Befestigungsmittel 31 als miteinander verschraubbare Gewinde ausgebildet sind.

Des Weiteren umfasst das Zusatzmodul 1 mindestens eine, vorzugsweise mehrere in den Figuren nicht näher bezeichnete Aufnahmevorrichtungen, in die jeweils ein aus einem verschiedene Messmodule 33 umfassenden Modulbaukasten auswählbares Messmodul 33 einsetzbar bzw. eingesetzt ist. Dabei ist jedes Messmodul 33 des Modulbaukastens jeweils dazu ausgebildet mindestens einen Umgebungsparameter und/oder mindestens eine Auswirkung der Umgebungsbedingungen auf das jeweilige Messmodul 33 messtechnisch zu erfassen.

Hierzu eignen sich insb. die nachfolgend als Beispiele aufgeführten Messmodule 33. So kann der Modulbaukasten und/oder das Zusatzmodul 1 z.B.
- ein als Temperatur-Messmodul T ausgebildetes Messmodul 33 zur messtechnischen Erfassung einer Umgebungstemperatur umfassen,
- ein als Feuchte-Messmodul F1 ausgebildetes Messmodul 33 zur messtechnischen Erfassung einer Umgebungsfeuchtigkeit, einer relativen Luftfeuchtigkeit oder einer absoluten Luftfeuchtigkeit umfassen,
- ein als Vibrations-Messmodul V ausgebildetes Messmodul 33 zur messtechnischen Erfassung von Vibrationen des Zusatzmoduls 1 umfassen,
- ein als Konzentrations-Messmodul K ausgebildetes Messmodul 33 zur messtechnischen Erfassung einer Konzentration eines Stoffes, eines aggressiven und/oder korrosiven Mediums, eines Salzgehalts und/oder eines Chlorgehalts, die in der Umgebung enthalten ist, umfassen, und/oder
- ein als Strahlungs-Messmodul γ ausgebildetes Messmodul 33 zur messtechnischen Erfassung einer auf das Strahlungs-Messmodul γ einwirkenden Strahlung, einer auf das Strahlungs-Messmodul γ einwirkenden Sonneneinstrahlung oder einer auf das Strahlungs-Messmodul γ einwirkenden radioaktiven Strahlung umfassen.

In diesen Messmodulen 33 können z.B. aus dem Stand der Technik bekannte, zur messtechnischen Erfassung der jeweiligen Größe geeignete Sensoren eingesetzt werden.

Alternativ oder zusätzlich hierzu kann der Modulbaukasten und/oder das Zusatzmodul 1 natürlich mindestens ein weiteres Messmodul 33 zur messtechnischen Erfassung mindestens eines weiteren Umgebungsparameters und/oder mindestens einer weiteren Auswirkung der Umgebungsbedingungen umfassen. Ein Beispiel hierfür ist ein als Feuchte-Messmodul F2 ausgebildetes Messmodul 33 zur messtechnischen Erfassung einer in ein das Feuchte-Messmodul F2 umgebendes Gehäuse eingedrungenen Feuchtigkeit. Ein weiteres Beispiel ist ein Korrosions-Messmodul R, das ein den Umgebungsbedingungen ausgesetztes Opferelement umfasst, das eine mittels des Korrosions-Messmoduls R messbare, sich durch Korrosion des Opferelements verändernde Eigenschaft aufweist. Als Opferelement eignet sich z.B. eine an eine Messschaltung angeschlossene Opferanode, deren durch Korrosion veränderlicher elektrischer Widerstand mittels der Messschaltung messtechnisch erfasst wird.

Optional kann der Baukasten und/oder das Zusatzmodul 1 zusätzlich zu den Messmodulen 33 auch mindestens ein Blindmodul B umfassen. Diese Blindmodule B sind jeweils derart in die Aufnahmevorrichtungen einsetzbar bzw. eingesetzt, dass sie die jeweilige Aufnahmevorrichtung verschließen. Blindmodule B bieten den Vorteil, dass durch sie überzählige, am Einsatzort nicht zur Aufnahme eines der Messmodule 33 benötigte Aufnahmevorrichtungen des Zusatzmoduls 1 verschlossen werden können.

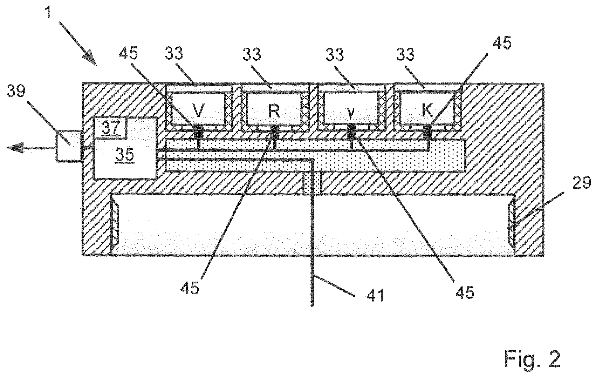

Aus dem Baukasten werden die jeweils zur messtechnischen Erfassung der an dem Einsatzort des jeweiligen Zusatzmoduls 1 belastungsrelevanten Umgebungsparameter und/oder Auswirkungen geeigneten Messmodule 33 ausgewählt und in das Zusatzmodul 1 eingesetzt. Wird hierfür nur eine Anzahl von Messmodulen 33 benötigt, die geringer als die Anzahl der Aufnahmevorrichtungen des Zusatzmoduls 1 ist, so wird in die verbleibenden Aufnahmevorrichtungen vorzugsweise jeweils eines der Blindmodule B eingesetzt. So kann das Zusatzmodul 1 für ein in einem Schwimmbad eingesetztes Feldgerät 3 mit einem Temperatur-Messmodul T, einem Feuchte-Messmodul F1 zur messtechnischen Erfassung der Luftfeuchtigkeit, einem Konzentrations-Messmodul K zur messtechnischen Erfassung des in der Umgebung enthaltenen Chlorgehalts und einem Blindmodul B ausgestattet sein. Dieses Beispiel ist in Fig. 1 dargestellt. Analog kann das Zusatzmodul 1 für ein auf einer Bohrinsel eingesetztes Feldgerät 3 mit einem Vibrations-Messmodul V, einem Korrosions-Messmodul R, einem Strahlungs-Messmodul γ zur messtechnischen Erfassung der Sonneneinstrahlung und einem Konzentrations-Messmodul K zur messtechnischen Erfassung des in der Umgebung enthaltenen Salzgehalts ausgestattet sein. Dieses Beispiel ist in Fig. 2 dargestellt.

Erfindungsgemäße Zusatzmodule 1 umfassen jeweils eine Auswertungseinheit 35, die dazu ausgestaltet ist, anhand der mittels der ausgewählten, in die Aufnahmevorrichtungen eingesetzten und an die Auswertungseinheit 35 angeschlossenen Messmodule 33 erfassten Umgebungsparameter und/oder Auswirkungen eine auf das mit dem Zusatzmodul 1 ausgestattete Feldgerät 3 einwirkende momentane Belastung und/oder eine Gesamtbelastung, der das mit dem Zusatzmodul 1 ausgestattete Feldgerät 3 während dessen Einsatzdauer bisher insgesamt ausgesetzt gewesen ist, zu ermitteln.

Die Erfindung weist die eingangs genannten Vorteile auf. Einige optionale, einzeln und/oder in Kombination miteinander einsetzbare bevorzugte Ausgestaltungen einzelner Merkmale der Erfindung sind nachfolgend im Detail beschriebenen.

So kann die Auswertungseinheit 35 optional derart ausgebildet sein, dass sie den mittels der daran angeschlossenen Messmodule 33 erfassten momentanen Werten der Umgebungsparameter und/oder der Auswirkungen anhand von in einem Speicher 37 abgespeicherten Kenndaten oder Kennlinien jeweils einen Umgebungsbelastungswert zuordnet und die momentane Belastung als Funktion, als Summe oder als gewichtete Summe der Umgebungsbelastungswerte bestimmt. Alternativ oder zusätzlich hierzu ist die Auswertungseinheit 35 optional vorzugsweise derart ausgebildet, dass sie die Gesamtbelastung als Integral der fortlaufend bestimmten momentanen Belastungen über die Einsatzdauer bestimmt.

Alternativ oder zusätzliche hierzu ist die Auswertungseinheit 35 vorzugsweise derart ausgebildet, dass sie einen Alarm ausgibt, sobald die momentane Belastung und/oder die bisherige Gesamtbelastung einen hierfür vorgegebenen Grenzwert überschreitet.

Alternativ oder zusätzliche hierzu ist die Auswertungseinheit 35 vorzugsweise derart ausgebildet, dass sie anhand der Gesamtbelastung eine verbleibende Resteinsatzdauer ermittelt. Das bietet den Vorteil, dass eine vor Ablauf der Resteinsatzdauer auszuführende Wartung und/oder Kalibration des Feldgeräts 3 oder ein vor Ablauf der Resteinsatzdauer auszuführender Austausch des Feldgeräts 3 oder der Messeinrichtung 5 des Feldgerät 3 entsprechend terminiert werden kann.

Optional umfasst das Zusatzmodul 1 einen an die Auswertungseinheit 35 angeschlossenen Ausgang 39, über den die Auswertungseinheit 35 die momentane Belastung, die Gesamtbelastung und/oder die verbleibende Resteinsatzdauer, sowie gegebenenfalls auch den Alarm ausgibt, anzeigt und/oder in auslesbarer Form zur Verfügung stellt.

Alternativ oder zusätzlich hierzu umfasst das Zusatzmodul 1 vorzugsweise elektrische Anschlussmittel 41, über die das Zusatzmodul 1 elektrisch an die in dem prozessabgewandten Bereich des Feldgeräts 3 angeordnete Elektronik 23 des Feldgeräts 3 anschließbar bzw. angeschlossen ist.

In dem Fall ist das Zusatzmodul 1 optional vorzugsweise derart ausgebildet ist, dass es über die elektrischen Anschlussmittel 41 vom Feldgerät 3 mit Energie versorgbar ist. Alternativ kann die Zusatzeinrichtung 1 eine eigene Energieversorgung umfassen oder über eine separate Energieversorgungseinheit gespeist werden.

Alternativ oder zusätzlich hierzu ist die Auswertungseinheit 35 vorzugsweise derart ausgebildet, dass sie die momentane Belastung und/oder die Gesamtbelastung unter zusätzlicher Berücksichtigung mindestens einer über die Anschlussmittel 41 an die Auswerteinheit 35 übermittelbaren bzw. übermittelten, vom Feldgerät 3 messtechnisch erfassten Prozessgröße PG bestimmt. Das bietet den Vorteil, dass hierüber auch prozessseitig auf das Feldgerät 3 einwirkende Prozessbedingungen berücksichtigt werden können, die zu Funktionsbeeinträchtigungen des Feldgeräts 3 führen können. Dabei umfassen die Prozessgrößen PG vorzugsweise die Messgröße L und/oder mindestens eine jeweils mittels der Messeinrichtung 5 oder mittels eines in dem prozesszugewandten Bereich des Feldgeräts 3 angeordneten Sensors 43 messtechnisch erfassbare oder erfasste Hilfsgröße H. Als Hilfsgröße H eignen sich z.B. Prozessparameter der auf den prozesszugewandten Bereich des Feldgeräts 3 einwirkenden Prozessbedingungen PB, wie z.B. eine mittels eines Temperatursensors gemessene Prozesstemperatur und/oder ein mittels eines Drucksensors gemessener Prozessdruck.

Bei dieser Ausführungsvariante kann die Auswertungseinheit 35 optional z.B. derart ausgebildet sein, dass sie jeder Prozessgröße PG jeweils anhand von in dem Speicher 37 abgespeicherten Kenndaten oder Kennlinien einen Prozessbelastungswert zuordnet und die momentane Belastung als Funktion, als Summe oder als gewichtete Summe der Umgebungsbelastungswerte und der Prozessbelastungswerte bestimmt.

Unabhängig von den zuvor genannten Ausführungsformen erfolgt der elektrische Anschluss der Anschlussmittel 41 des Zusatzmodul 1 an die Elektronik 23 des Feldgeräts 3 vorzugsweise über eine im Feldgerät 3 ohnehin vorhandene, zur Energieübertragung und/oder zur Übermittlung der Prozessgrößen PG geeignete Schnittstelle 25. Hierzu eignet sich insb. die zuvor genannten, in aus dem Stand der Technik bekannten Feldgeräten für den Anschluss einer Einheit, wie z.B. einer Bedienoberfläche und/oder einer Anzeige, vorgesehenen Schnittstellen.

Eine insb. im Hinblick auf einen möglicher Weise gewünschten elektrischen Anschluss des Zusatzmoduls 1 an die Elektronik 23 des Feldgeräts 3 und/oder im Hinblick auf eine möglichst einfache Montierbarkeit des Zusatzmoduls 1 auf dem prozessabgewandten Bereich des Feldgeräts 3 derzeit als besonders vorteilhaft angesehene Ausführungsform besteht darin, das Zusatzmodul 1 als auf dem die Elektronik 23 umfassenden Gehäuse 21 des Feldgeräts 3 montierbaren Gehäusedeckel auszubilden. Diese Ausführungsform ist in Fig. 1 und 2 dargestellt und bietet den Vorteil, dass auch bereits bestehende oder sogar bereits im Einsatz befindliche, einen herkömmlichen Gehäusedeckel umfassende Feldgeräte 3 bei Bedarf jederzeit problemlos mit dem Zusatzmodul 1 ausgestattet werden können, indem das Zusatzmodul 1 anstelle des herkömmlichen Gehäusedeckels auf dem Gehäuse 21 montiert wird. Dabei bieten Feldgeräte 3, deren herkömmlicher Gehäusedeckel eine der zuvor beschriebenen Einheiten umfasst, den Vorteil, dass das an die anstelle des herkömmlichen Gehäusedeckels tretende Zusatzmodul 1 über die für den Anschluss der Einheit ohnehin vorgesehene Schnittstelle 25 an die Elektronik 23 anschliessbar bzw. angeschlossen ist.

Unabhängig von den zuvor beschriebenen Ausgestaltungen des Zusatzmoduls 1 sind die Aufnahmevorrichtungen des Zusatzmoduls 1 vorzugweise als Steckplätze ausgebildet, in die die Messmodule 33 derart einsetzbar sind, dass jedes in einer der Aufnahmevorrichtungen eingesetzte Messmodul 33 jeweils mindestens eine den Umgebungsbedingungen ausgesetzte Außenseite aufweist. Fig. 1 und 2 zeigen hierzu ein Ausführungsbeispiel, bei dem die Messmodule 33 und die Aufnahmevorrichtungen jeweils zueinander komplementäre Verbindungselemente 45, wie z.B. die in Fig. 2 dargestellten Steckverbinder, aufweisen, über die die Messmodule 33 in den Aufnahmevorrichtungen befestigbar oder befestigt sind und/oder elektrisch an die Auswertungseinheit 35 anschließbar oder angeschlossen sind.

Optional können die Messmodule 33 des Baukastens bzw. die in die Zusatzeinrichtung 1 eingesetzten Messmodule 33 jeweils eine mittels der daran angeschlossenen Auswertungseinheit 35 auslesbare Modulkennung aufweisen. Das bietet den Vorteil, dass die Auswertungseinheit 35 die daran angeschlossenen Messmodule 33 selbsttätig erkennt und somit unmittelbar nach deren Bestückung mit dem oder den Messmodulen 33 ihren Betrieb aufnehmen kann.

### Bezugszeichenliste

| | | | |
|---|---|---|---|
| 1 | Zusatzmodul | 25 | Schnittstelle |
| 3 | Feldgerät | 27 | Ausgang |
| 5 | Messeinrichtung | 29 | Befestigungsmittel |
| 7 | Prozessanschluss | 31 | Befestigungsmittel |
| 9 | Behälter | 33 | Messmodul |
| 11 | Füllgut | 35 | Auswerteinheit |
| 13 | Prozessanschluss | 37 | Speicher |
| 15 | Endbereich | 39 | Ausgang |
| 17 | Drucksensor | 41 | Anschlussmittel |
| 19 | Füllgutoberfläche | 43 | Sensor |
| 21 | Gehäuse | 45 | Verbindungselement |
| 23 | Elektronik | | |

## Patentansprüche

1. System umfassend: ein Feldgerät (3) zur Messung und/oder Überwachung mindestens einer Messgröße (L), ein Zusatzmodul (1) für das Feldgerät (3) und einen verschiedene Messmodule (33) umfassenden Modulbaukasten,
wobei das Feldgerät (3) eine Messeinrichtung (5) zur messtechnischen Erfassung der Messgröße (L) und einen Prozessanschluss (7) umfasst,
wobei der Prozessanschluss (7) dazu ausgestaltet ist, das Feldgerät (3) derart an einem Einsatzort zu befestigen, dass ein zumindest einen Teil der Messeinrichtung (5) umfassender, prozesszugewandter Bereich des Feldgeräts (3) am Einsatzort herrschenden Prozessbedingungen (PB) ausgesetzt ist und ein prozessabgewandter Bereich des Feldgeräts (3) am Einsatzort herrschenden Umgebungsbedingungen (UB) ausgesetzt ist,
wobei das Zusatzmodul (1) Befestigungsmittel (29) umfasst mittels der das Zusatzmodul (1) auf dem prozessabgewandten Bereich des Feldgeräts (3) montierbar oder montiert ist,
wobei das Zusatzmodul (1) mindestens eine Aufnahmevorrichtung umfasst, die jeweils als Steckplatz ausgebildet ist und in die jeweils ein aus den Messmodulen (33) des Modulbaukastens auswählbares Messmodul (33) derart einsetzbar oder eingesetzt ist, dass mindestens eine Außenseite des jeweiligen Messmoduls (33) den Umgebungsbedingungen (UB) ausgesetzt ist,
wobei jedes Messmodul (33) jeweils dazu ausgebildet mindestens einen Umgebungsparameter und/oder mindestens eine Auswirkung der Umgebungsbedingungen auf das jeweilige Messmodul (33) messtechnisch zu erfassen, und
wobei das Zusatzmodul (1) eine Auswertungseinheit (35) umfasst, die dazu ausgestaltet ist anhand der mittels der ausgewählten, in die Aufnahmevorrichtungen eingesetzten und an die Auswerteeinheit (35) angeschlossenen Messmodule (33) erfassten Umgebungsparameter und/oder Auswirkungen eine auf das mit dem Zusatzmodul (1) ausgestattete Feldgerät (3) einwirkende momentane Belastung und/oder eine Gesamtbelastung, der das mit dem Zusatzmodul (1) ausgestattete Feldgerät (3) während dessen Einsatzdauer bisher insgesamt ausgesetzt gewesen ist, zu ermitteln.

2. System gemäß Anspruch 1, bei dem der Modulbaukasten und/oder das Zusatzmodul (1):
ein als Temperatur-Messmodul (T) ausgebildetes Messmodul (33) zur messtechnischen Erfassung einer Umgebungstemperatur umfasst,
ein als Feuchte-Messmodul (F1) ausgebildetes Messmodul (33) zur messtechnischen Erfassung einer Umgebungsfeuchtigkeit, einer relativen Luftfeuchtigkeit oder einer absoluten Luftfeuchtigkeit umfasst,
ein als Vibrations-Messmodul (V) ausgebildetes Messmodul (33) zur messtechnischen Erfassung von Vibrationen des Zusatzmoduls (1) umfasst,
ein als Konzentrations-Messmodul (K) ausgebildetes Messmodul (33) zur messtechnischen Erfassung einer Konzentration eines Stoffes, eines aggressiven und/oder korrosiven Mediums, eines Salzgehalts und/oder eines Chlorgehalts, die in der Umgebung enthalten ist, umfasst,
ein als Strahlungs-Messmodul (γ) ausgebildetes Messmodul (33) zur messtechnischen Erfassung einer auf das Strahlungs-Messmodul (γ) einwirkenden Strahlung, einer auf das Strahlungs-Messmodul (γ) einwirkenden Sonneneinstrahlung oder einer auf das Strahlungs-Messmodul (γ) einwirkenden radioaktiven Strahlung umfasst,
ein als Feuchte-Messmodul (F2) ausgebildetes Messmodul (33) zur messtechnischen Erfassung einer in ein das Feuchte-Messmodul (F2) umgebendes Gehäuse eingedrungenen Feuchtigkeit umfasst,
ein Korrosions-Messmodul (R) umfasst, das ein den Umgebungsbedingungen ausgesetztes Opferelement umfasst, das mindestens eine messbare, sich durch Korrosion des Opferelements verändernde Eigenschaft aufweist, und/oder
ein in die Aufnahmevorrichtungen einsetzbares, im eingesetzten Zustand die jeweilige Aufnahmevorrichtung verschließendes Blindmodul (B) umfasst.

3. System gemäß einem der Ansprüche 1 bis 2, bei dem die Auswertungseinheit (35) derart ausgebildet ist, dass sie
mittels der daran angeschlossenen Messmodule (33) erfassten momentanen Werten der Umgebungsparameter und/oder der Auswirkungen anhand von in einem Speicher (37) abgespeicherten Kenndaten oder Kennlinien jeweils einen Umgebungsbelastungswert zuordnet und die momentane Belastung als Funktion, als Summe oder als gewichtete Summe der Umgebungsbelastungswerte bestimmt,
die Gesamtbelastung als Integral der fortlaufend bestimmten Belastungen über die bisherige Einsatzdauer bestimmt,
einen Alarm ausgibt, sobald die momentane Belastung und/oder die bisherige Gesamtbelastung einen hierfür vorgegebenen Grenzwert überschreitet, und/oder
anhand der Gesamtbelastung eine verbleibende Resteinsatzdauer ermittelt.

4. System gemäß einem der Ansprüche 1 bis 3, bei dem an die Auswertungseinheit (35) ein Ausgang (39) angeschlossen ist, über den die Auswertungseinheit (35) die momentane Belastung, die Gesamtbelastung, die verbleibende Resteinsatzdauer und/oder den Alarm ausgibt, anzeigt und/oder in auslesbarer Form zur Verfügung stellt.

5. System gemäß einem der Ansprüche 1 bis 4, bei dem das Zusatzmodul (1) als ein auf einem Gehäuse (21) des prozessabgewandten Bereichs des Feldgeräts (3) montierbarer Gehäusedeckel ausgebildet ist.

6. System gemäß einem der Ansprüche 1 bis 5, bei dem
die Messmodule (33) und die Aufnahmevorrichtungen zueinander komplementäre Verbindungselemente (45) aufweisen, über die die Messmodule (33) in den Aufnahmevorrichtungen befestigbar oder befestigt sind und/oder über die die Messmodule (33) elektrisch an die Auswertungseinheit (35) anschließbar oder angeschlossen sind.

7. System gemäß einem der Ansprüche 1 bis 6, bei dem mindestens eines oder jedes Messmodul (33) des Modulbaukastens und/oder der Zusatzeinrichtung (1) jeweils eine mittels der daran angeschlossenen Auswertungseinheit (35) auslesbare Modulkennung aufweist.

8. System gemäß einem der Ansprüche 1 bis 7, bei dem
das Feldgerät (3) eine in dem prozessabgewandten Bereich des Feldgeräts (3) angeordnete, an die Messeinrichtung (5) angeschlossene Elektronik (23) umfasst, und
das Zusatzmodul (1) elektrische Anschlussmittel (41) umfasst, über die das Zusatzmodul (1) elektrisch an die Elektronik (23) des Feldgeräts (3) anschließbar oder angeschlossen ist.

9. System gemäß Anspruch 8, bei dem das Zusatzmodul (1) derart ausgebildet ist, dass es über die elektrischen Anschlussmittel (41) vom Feldgerät (3) mit Energie versorgbar ist.

10. System gemäß einem der Ansprüche 8 bis 9, bei dem
die Auswertungseinheit (35) dazu ausgebildet ist, die momentane Belastung und/oder die Gesamtbelastung unter zusätzlicher Berücksichtigung mindestens einer über die Anschlussmittel (41) an die Auswertungseinheit (35) übermittelbaren oder übermittelten, vom Feldgerät (3) messtechnisch erfassbaren oder erfassten Prozessgröße (PG) zu bestimmen, und
die Prozessgröße(n) (PG) die Messgröße (L) und/oder mindestens eine jeweils mittels der Messeinrichtung (5) oder mittels eines in dem prozesszugewandten Bereich des Feldgeräts (3) angeordneten Sensors (43) messtechnisch erfassbare oder erfasste Hilfsgröße (H) umfassen.

11. System gemäß Anspruch 10 in Kombination mit Anspruch 3, bei dem die Auswertungseinheit (35) derart ausgebildet ist, dass sie dem momentanen Wert jeder Prozessgröße (PG) jeweils anhand von in dem Speicher (37) abgespeicherten Kenndaten oder Kennlinien einen Prozessbelastungswert zuordnet und die momentane Belastung als Funktion, als Summe oder als gewichtete Summe der Prozessbelastungswerte und der Umgebungsbelastungswerte bestimmt.

12. System gemäß einem der Ansprüche 10 bis 11, bei dem
das Feldgerät (3) dazu ausgestaltet ist die Prozessgröße(n) (PG) messtechnisch zu erfassen und über eine an die Elektronik (23) angeschlossene Schnittstelle (25) oder eine für den Anschluss einer Bedieneinheit und/oder einer Anzeige vorgesehene, an die Elektronik (23) angeschlossene Schnittstelle (25) zur Verfügung zu stellen, und
die Zusatzeinrichtung (1) über die Schnittstelle (25) an die Elektronik (23) anschließbar oder angeschlossen ist.

## Claims

1. System comprising: a field device (3) for measuring and/or monitoring at least one measured variable (L), an additional module (1) for the field device (3) and a modular construction kit comprising various measuring modules (33),
wherein the field device (3) comprises a measuring device (5) for metrological detection of the measured variable (L) and a process connection (7),
wherein the process connection (7) is designed to fasten the field device (3) to a place of use in such a way that an area of the field device (3) facing the process and comprising at least a part of the measuring device (5) is exposed to prevailing process conditions (PB) at the place of use and an area of the field device (3) facing away from the process is exposed to prevailing ambient conditions (UB) at the place of use,
wherein the additional module (1) comprises fastening means (29) by means of which the additional module (1) can be mounted or is mounted on the area of the field device (3) remote from the process,
wherein the additional module (1) comprises at least one receiving device which is designed as a slot and into which a measuring module (33) selectable from the measuring modules (33) of the modular construction kit can be inserted or inserted in such a way that at least one outer side of the respective measuring module (33) is exposed to the ambient conditions (UB),
wherein each measuring module (33) is designed to measure at least one environmental parameter and/or at least one effect of the environmental conditions on the respective measuring module (33), and
wherein the additional module (1) comprises an evaluation unit (35) which is designed to determine an instantaneous load acting on the field device (3) equipped with the additional module (1) and/or a total load to which the field device (3) equipped with the additional module (1) has been exposed in total during its period of use to date on the basis of the environmental parameters and/or effects recorded by means of the selected measuring modules (33) inserted in the receiving devices and connected to the evaluation unit (35).

2. System according to claim 1, in which the modular construction kit and/or the additional module (1) comprises:
a measuring module (33) designed as a temperature measuring module (T) for the metrological detection of an ambient temperature,
a measuring module (33) designed as a humidity measuring module (F1) for the metrological detection of an ambient humidity, a relative humidity or an absolute humidity,
a measuring module (33) designed as a vibration measuring module (V) for the metrological detection of vibrations of the additional module (1),
a measuring module (33) in the form of a concentration measuring module (K) for the metrological detection of a concentration of a substance, an aggressive and/or corrosive medium, a salt content and/or a chlorine content contained in the environment,
a measuring module (33) designed as a radiation measuring module (γ) for the metrological detection of radiation acting on the radiation measuring module (y), of solar radiation acting on the radiation measuring module (γ) or of radioactive radiation acting on the radiation measuring module (γ),
a measuring module (33) designed as a humidity measuring module (F2) for the metrological detection of moisture penetrating into a housing surrounding the humidity measuring module (F2),
a corrosion measuring module (R) comprising a sacrificial element which is exposed to the ambient conditions and has at least one measurable property which changes as a result of corrosion of the sacrificial element, and/or
a blind module (B) insertable into the receptacles and closing the respective receptacle when inserted.

3. System according to one of claims 1 to 2, in which the evaluation unit (35) is designed in such a way that it
assigns an environmental load value to instantaneous values of the environmental parameters and/or the effects recorded by means of the measuring modules (33) connected thereto on the basis of characteristic data or characteristic curves stored in a memory (37) and determines the instantaneous load as a function, as a sum or as a weighted sum of the environmental load values,
determines the total load as the integral of the continuously determined loads over the period of use to date,
issues an alarm as soon as the current load and/or the total load to date exceeds a predetermined limit value, and/or
determines a remaining operating time on the basis of the total load.

4. System according to one of claims 1 to 3, in which an output (39) is connected to the evaluation unit (35), via which the evaluation unit (35) outputs, displays and/or makes available in readable form the instantaneous load, the total load, the remaining operating time and/or the alarm.

5. System according to one of claims 1 to 4, in which the additional module (1) is designed as a housing cover that can be mounted on a housing (21) of the area of the field device (3) facing away from the process.

6. System according to one of claims 1 to 5, in which
the measuring modules (33) and the receiving devices have mutually complementary connecting elements (45), via which the measuring modules (33) can be fastened or are fastened in the receiving devices and/or via which the measuring modules (33) can be electrically connected or are electrically connected to the evaluation unit (35).

7. System according to any one of claims 1 to 6, wherein at least one or each measuring module (33) of the modular construction kit and/or the additional device (1) has a respective module identifier readable by means of the evaluation unit (35) connected thereto.

8. System according to one of claims 1 to 7, wherein
the field device (3) comprises electronics (23) arranged in the area of the field device (3) remote from the process and connected to the measuring device (5), and
the additional module (1) comprises electrical connection means (41) via which the additional module (1) can be electrically connected or is connected to the electronics (23) of the field device (3).

9. System according to claim 8, in which the additional module (1) is designed in such a way that it can be supplied with energy from the field device (3) via the electrical connection means (41).

10. System according to one of claims 8 to 9, in which
the evaluation unit (35) is designed to determine the instantaneous load and/or the total load, additionally taking into account at least one process variable (PG) which can be transmitted or is transmitted to the evaluation unit (35) via the connection means (41) and can be detected or is detected by the field device (3) using measurement technology, and
the process variable(s) (PG) comprise the measured variable (L) and/or at least one auxiliary variable (H) which can be detected or is detected by measurement by means of the measuring device (5) or by means of a sensor (43) arranged in the process-facing region of the field device (3).

11. System according to claim 10 in combination with claim 3, in which the evaluation unit (35) is designed in such a way that it assigns a process load value to the instantaneous value of each process variable (PG) in each case on the basis of characteristic data or characteristic curves stored in the memory (37) and determines the instantaneous load as a function, as a sum or as a weighted sum of the process load values and the ambient load values.

12. System according to one of claims 10 to 11, wherein
the field device (3) is designed to detect the process variable(s) (PG) metrologically and to make them available via an interface (25) connected to the electronics (23) or an interface (25) provided for the connection of an operating unit and/or a display and connected to the electronics (23), and
the additional device (1) can be connected or is connected to the electronics (23) via the interface (25).

## Revendications

1. Système comprenant : un appareil de terrain (3) pour la mesure et/ou la surveillance d'au moins une grandeur de mesure (L), un module supplémentaire (1) pour l'appareil de terrain (3) et un ensemble de modules comprenant différents modules de mesure (33),
l'appareil de terrain (3) comprenant un dispositif de mesure (5) pour la saisie métrologique de la grandeur de mesure (L) et un raccord de processus (7),
le raccord de processus (7) étant conçu pour fixer l'appareil de terrain (3) sur un lieu d'utilisation de telle sorte qu'une zone de l'appareil de terrain (3) tournée vers le processus et comprenant au moins une partie du dispositif de mesure (5) soit exposée aux conditions de processus (PB) régnant sur le lieu d'utilisation et qu'une zone de l'appareil de terrain (3) éloignée du processus soit exposée aux conditions ambiantes (UB) régnant sur le lieu d'utilisation,
le module supplémentaire (1) comprenant des moyens de fixation (29) au moyen desquels le module supplémentaire (1) peut être monté ou est monté sur la zone de l'appareil de terrain (3) opposée au processus,
le module supplémentaire (1) comprenant au moins un dispositif de réception qui est respectivement conçu comme un emplacement d'enfichage et dans lequel respectivement un module de mesure (33) pouvant être sélectionné parmi les modules de mesure (33) du système modulaire peut être inséré ou mis en place de telle sorte qu'au moins un côté extérieur du module de mesure respectif (33) est exposé aux conditions ambiantes (UB),
chaque module de mesure (33) étant conçu pour mesurer au moins un paramètre environnemental et/ou au moins un effet des conditions environnementales sur le module de mesure (33) respectif, et
le module supplémentaire (1) comprenant une unité d'évaluation (35) qui est conçue pour déterminer, à l'aide des paramètres environnementaux et/ou des effets saisis au moyen des modules de mesure (33) sélectionnés, insérés dans les dispositifs de réception et raccordés à l'unité d'évaluation (35), une charge momentanée agissant sur l'appareil de terrain (3) équipé du module supplémentaire (1) et/ou une charge totale à laquelle l'appareil de terrain (3) équipé du module supplémentaire (1) a été globalement exposé jusqu'à présent pendant sa durée d'utilisation.

2. Système selon la revendication 1, dans lequel l'ensemble de modules et/ou le module supplémentaire (1) comprend:
un module de mesure (33) conçu comme module de mesure de la température (T) pour la saisie métrologique d'une température ambiante,
un module de mesure (33) conçu comme module de mesure de l'humidité (F1) pour la saisie métrologique d'une humidité ambiante, d'une humidité relative ou d'une humidité absolue,
un module de mesure (33) conçu comme module de mesure des vibrations (V) pour la saisie métrologique des vibrations du module supplémentaire (1),
un module de mesure (33) conçu comme module de mesure de concentration (K) pour la saisie technique de mesure d'une concentration d'une substance, d'un milieu agressif et/ou corrosif, d'une teneur en sel et/ou d'une teneur en chlore, qui est contenue dans l'environnement,
un module de mesure (33) conçu comme module de mesure de rayonnement (γ) pour la détection technique de mesure d'un rayonnement agissant sur le module de mesure de rayonnement (y), d'un rayonnement solaire agissant sur le module de mesure de rayonnement (γ) ou d'un rayonnement radioactif agissant sur le module de mesure de rayonnement (y),
un module de mesure (33) réalisé sous forme de module de mesure d'humidité (F2) pour la saisie métrologique d'une humidité ayant pénétré dans un boîtier entourant le module de mesure d'humidité (F2),
un module de mesure de la corrosion (R) qui comprend un élément sacrificiel exposé aux conditions ambiantes, qui présente au moins une propriété mesurable qui se modifie par la corrosion de l'élément sacrificiel, et/ou
comprend un module d'obturation (B) insérable dans les dispositifs de réception et obturant, à l'état inséré, le dispositif de réception correspondant.

3. Système selon l'une des revendications 1 à 2, dans lequel l'unité d'évaluation (35) est conçue de telle sorte que
associe à des valeurs instantanées des paramètres environnementaux et/ou des effets saisis au moyen des modules de mesure (33) qui y sont raccordés, à l'aide de données caractéristiques ou de courbes caractéristiques enregistrées dans une mémoire (37), respectivement une valeur de charge environnementale et détermine la charge instantanée en fonction, en tant que somme ou en tant que somme pondérée des valeurs de charge environnementale,
détermine la charge totale comme intégrale des charges déterminées en continu sur la durée d'utilisation précédente,
émet une alarme dès que la charge momentanée et/ou la charge totale jusqu'à présent dépassent une valeur limite prédéfinie à cet effet, et/ou
détermine une durée d'utilisation restante à l'aide de la charge totale.

4. Système selon l'une des revendications 1 à 3, dans lequel une sortie (39) est raccordée à l'unité d'évaluation (35), par l'intermédiaire de laquelle l'unité d'évaluation (35) émet, affiche et/ou met à disposition sous une forme lisible la charge momentanée, la charge totale, la durée d'utilisation résiduelle restante et/ou l'alarme.

5. Système selon l'une des revendications 1 à 4, dans lequel le module supplémentaire (1) est réalisé sous la forme d'un couvercle de boîtier pouvant être monté sur un boîtier (21) de la zone de l'appareil de terrain (3) située à l'opposé du processus.

6. Système selon l'une quelconque des revendications 1 à 5, dans lequel
les modules de mesure (33) et les dispositifs de réception présentent des éléments de liaison (45) complémentaires entre eux, par lesquels les modules de mesure (33) peuvent être fixés ou sont fixés dans les dispositifs de réception et/ou par lesquels les modules de mesure (33) peuvent être raccordés ou sont raccordés électriquement à l'unité d'évaluation (35).

7. Système selon l'une des revendications 1 à 6, dans lequel au moins un ou chaque module de mesure (33) du ensemble de modules et/ou du module supplémentaire (1) présente respectivement un identifiant de module lisible au moyen de l'unité d'évaluation (35) qui lui est raccordée.

8. Système selon l'une quelconque des revendications 1 à 7, dans lequel
l'appareil de terrain (3) comprend une électronique (23) disposée dans la zone de l'appareil de terrain (3) située à l'opposé du processus et raccordée au dispositif de mesure (5), et
le module supplémentaire (1) comprend des moyens de raccordement électrique (41) par lesquels le module supplémentaire (1) peut être raccordé ou est raccordé électriquement à l'électronique (23) de l'appareil de terrain (3).

9. Système selon la revendication 8, dans lequel le module supplémentaire (1) est configuré de manière à pouvoir être alimenté en énergie par l'appareil de terrain (3) via les moyens de connexion électrique (41).

10. Système selon l'une quelconque des revendications 8 à 9, dans lequel l'unité d'évaluation (35) est conçue pour déterminer la charge instantanée et/ou la charge totale en tenant compte en outre d'au moins une grandeur de processus (PG) pouvant être détectée ou détectée par mesure par l'appareil de terrain (3) et pouvant être transmise ou transmise à l'unité d'évaluation (35) par l'intermédiaire des moyens de raccordement (41), et la ou les grandeurs de processus (PG) comprennent la grandeur de mesure (L) et/ou au moins une grandeur auxiliaire (H) pouvant être détectée ou détectée par technique de mesure respectivement au moyen du dispositif de mesure (5) ou au moyen d'un capteur (43) disposé dans la zone de l'appareil de terrain (3) orientée vers le processus.

11. Système selon la revendication 10 en combinaison avec la revendication 3, dans lequel l'unité d'évaluation (35) est configurée de telle sorte qu'elle associe une valeur de charge de processus à la valeur instantanée de chaque grandeur de processus (PG) respectivement à l'aide de données caractéristiques ou de courbes caractéristiques enregistrées dans la mémoire (37) et détermine la charge instantanée en fonction, en tant que somme ou en tant que somme pondérée des valeurs de charge de processus et des valeurs de charge ambiante.

12. Système selon l'une quelconque des revendications 10 à 11, dans lequel
l'appareil de terrain (3) est conçu pour détecter la ou les grandeurs de processus (PG) par une technique de mesure et les mettre à disposition via une interface (25) raccordée à l'électronique (23) ou une interface (25) prévue pour le raccordement d'une unité de commande et/ou d'un affichage et raccordée à l'électronique (23), et
le dispositif supplémentaire (1) peut être raccordé ou est raccordé à l'électronique (23) par l'intermédiaire de l'interface (25).
